# EUROPÄISCHE PATENTSCHRIFT

(11) **EP 1 264 657 B1**
(45) Veröffentlichungstag und Bekanntmachung des Hinweises auf die Patenterteilung: **02.05.2003**
(21) Anmeldenummer: 02012534.0
(22) Anmeldetag: 05.06.2002
(51) Int. Cl.: B23Q 3/02, B23Q 3/18, B23Q 11/00, B25B 5/08

(54) **Spannvorrichtung**
Clamping device
Dispositif de serrage

(30) Priorität: 05.06.2001 DE 10127207
(43) Veröffentlichungstag der Anmeldung: 11.12.2002
(73) Patentinhaber: Stark Spannsysteme GmbH, 6840 Götzis (AT)
(72) Erfinder: Kiefer, Roland, 73660 Urbach (DE); Mähr, Paul, 6840 Götzis (AT); Feulner, Josef, 80995 München (DE)
(74) Vertreter: von Ahsen, Erwin-Detlef, Dipl.-Ing.

(56) Entgegenhaltungen:
- EP-A- 0 936 025
- DE-A- 19 841 928
- DE-C- 19 757 430
- US-A- 5 997 011

## Beschreibung

Die Erfindung bezieht sich auf eine Spannvorrichtung zum positionierten Spannen von Werkstücken oder Werkzeugen auf Aufspannmodule, die Teil eines Maschinentisches oder einer Aufspannplatte sind und die Positionierbohrungen aufweisen, in denen Einzugsnippel einführbar sind.

Die Bearbeitung von Werkstücken bedingt eine exakte Festlegung derselben auf den Maschinentischen. Das ständige Umsetzen der Werkstücke bedingt jedes Mal eine präzise Aufnahme, um dort weiter zu arbeiten, wo begonnen wurde. An die Aufnahmemodule und Spannvorrichtungen sind somit hohe Anforderungen gestellt. Mittels Positionierbohrungen, die in die Einzugsnippel einführbar sind, wird eine lagebestimmte Ausrichtung mit den Aufnahmemodulen ermöglicht. Bei der Bearbeitung der Werkstücke wie Schleifen, Bohren, Fräsen oder Spanen fallen zwangsläufig Schmutzpartikel an, die zu einer Verunreinigung der Aufnahmemodule beitragen. Dieses zwingt zu Maßnahmen, die einer solchen Verunreinigung entgegenwirken. Insbesondere durch den Einsatz von Kühlmittel werden diese Schmutzpartikel aufgeschwemmt und dringen auch in die Aufnahmemodule ein.

Darunter leiden die Positionierbohrungen und die Einzugsnippel, sowie alle weiteren Aufnahmeflächen.

Es ist erforderlich, die Werkstücke so auf den Maschinentischen anzuordnen, daß eine exakte Bearbeitung möglich ist, auch dann wenn sie verschiedenen Arbeitsgängen auf verschiedenen Maschinentischen zuzuführen sind. Gerade beim Entfernen der Einzugsnippel aus den Zentrierbohrungen besteht die Gefahr, daß Schmutzpartikel in diese Bohrungen eindringen. Es ist daher bekannt, diese Zentrierbohrungen in dem Augenblick, in dem der Einzugsnippel entfernt wird, von Schmutzpartikeln frei zu blasen.

Diese geschieht gemäß DE 197 57 430 dadurch, daß der Zentrierbohrung von unten Druckluft über entsprechende Düsen zugeführt wird, wodurch die Schmutzpartikel ausgeblasen werden sollen. Diese Druckluft steht immer dann an, wenn der Einzugsnippel entfernt wird. Dieses Freiblasen muß mindestens so lange erfolgen, bis der Einzugsnippel total entfernt ist, da dann die größte Gefahr besteht, daß die Verunreinigungen in die Zentrierbohrung gelangen, da diese auf der Oberfläche der Aufspannplatte schweben. Ein Ausblasen der Zentrierbohrung allein bringt noch nicht den gewünschten Erfolg. Durch ein solches Ausblasen wird auch nur ein Teil der Zentrierbohrung erfaßt, so daß in deren unterem Bereich durchaus eine Verunreinigung verbleibt.

Hier setzt die Erfindung ein. Es ist Aufgabe der Erfindung den Zylinderraum einer Zentrierbohrung so abzudichten, daß keine Schmutzpartikel eindringen können, auch dann nicht, wenn der Einzugsnippel entfernt ist. Ferner ist es Aufgabe der Erfindung die Oberfläche der Aufnahmemodule ebenfalls frei von Verunreinigungen zu halten, um so ein exaktes Aufbringen von weiteren Modulen, Platten oder Werkstücken sicher zu stellen.

Die Lösung der Aufgabe ist den kennzeichnenden Merkmalen der Ansprüche zu entnehmen.

In den Zeichnungen ist die Erfindung näher beschrieben.

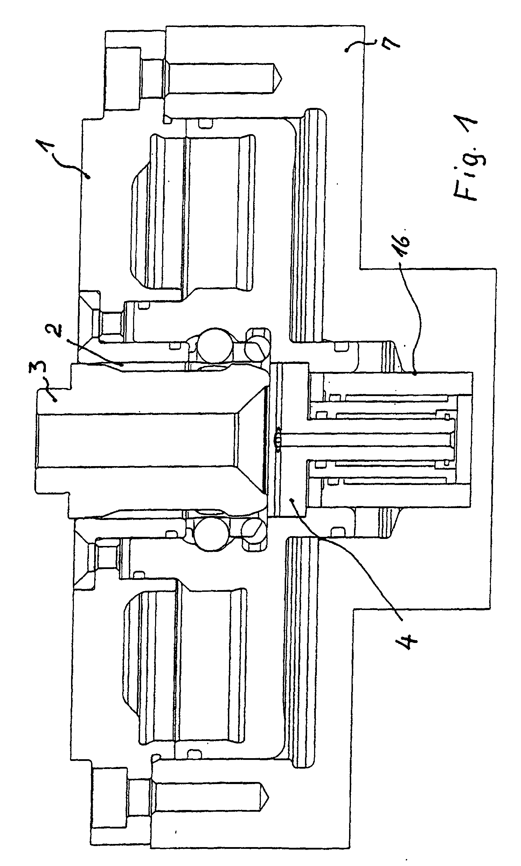

- Fig. 1: zeigt eine Seitenansicht mit eingesetztem Einzugsnippel.

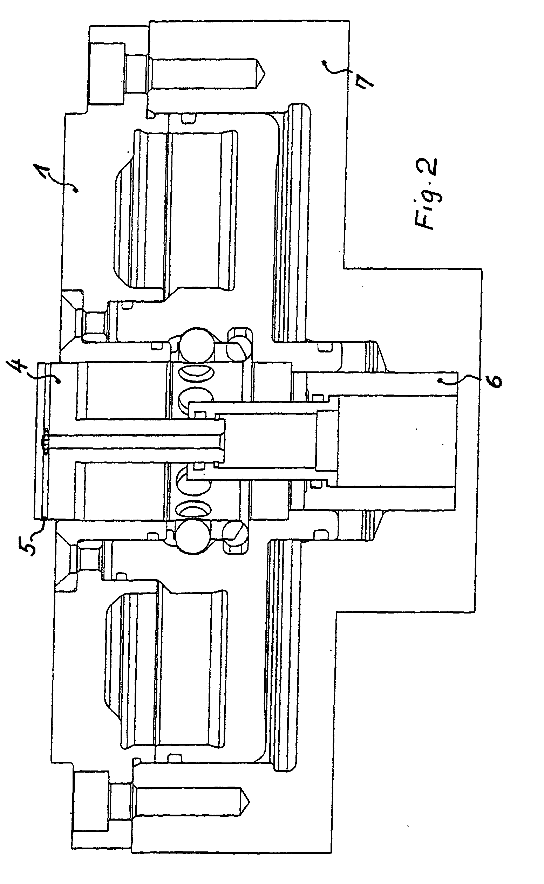

- Fig. 2: zeigt die Seitenansicht ohne Einzugsnippel.
- Fig. 3: zeigt ein Aufspannmodul.

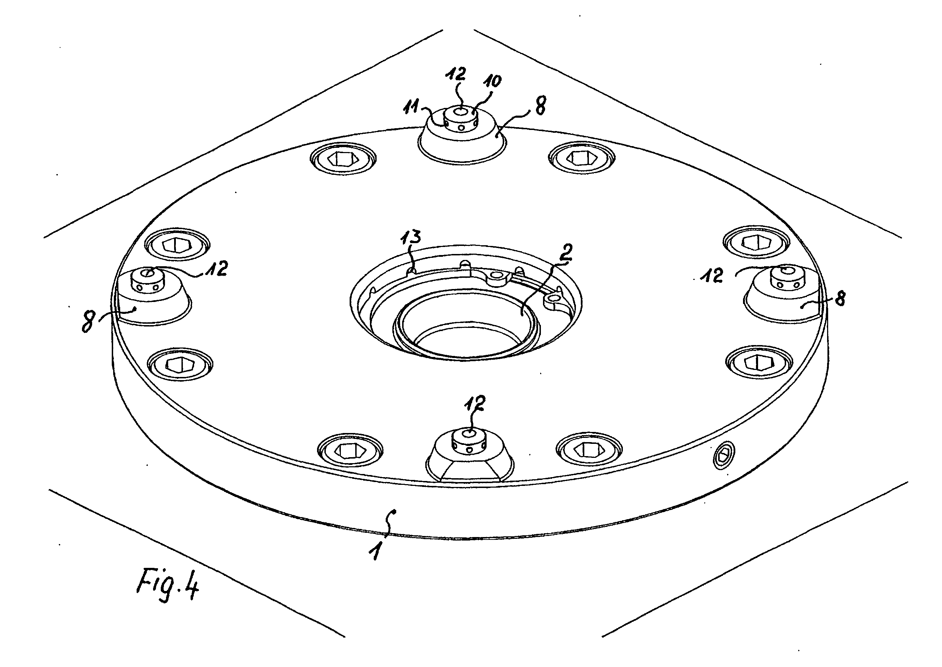

- Fig. 4: zeigt das Aufspannmodul mit wirksamen Ausblasdüsen.
- Fig. 5: zeigt das Aufspannmodul mit speziellen Düsen.

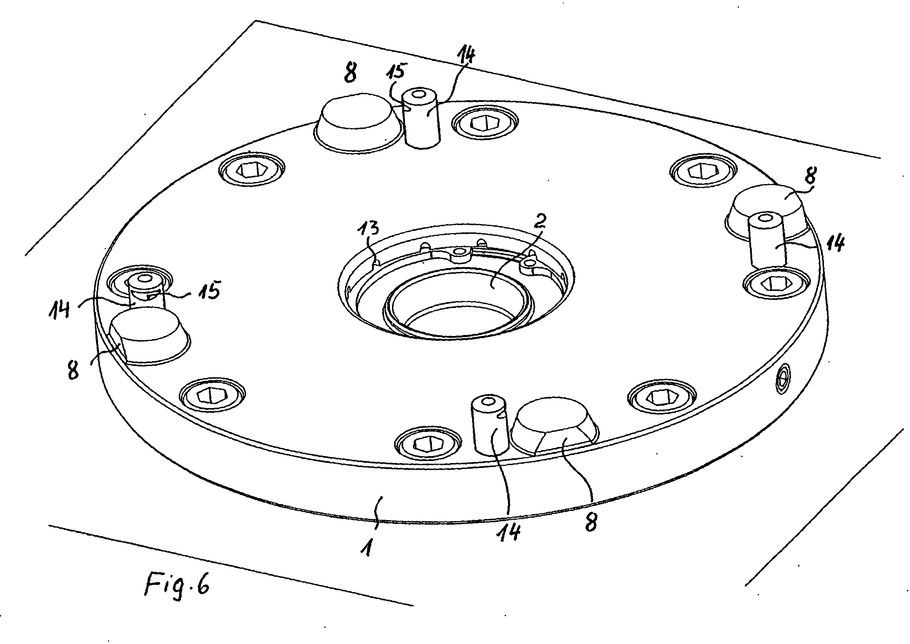

- Fig. 6: zeigt das Aufspannmodul mit ausgefahrenen speziellen Düsen.

Spannvorrichtungen zum Fixieren von Werkstücken sind u. a. in Aufspannmodulen integriert. Solche Aufspannmodule sind in Maschinentischen oder Maschinenpaletten eingesetzt. Teil des Aufspannmoduls 7 ist eine Scheibe 1, die mit einer zentralen Zylinderbohrung 2 versehen ist. In diese Zylinderbohrung 2 ist ein Einzugsnippel 3 einführbar, der zu einer Arbeitsvorrichtung gehört, die das zu bearbeitende Werkstück oder Werkzeug aufnimmt. Solche Arbeitsvorrichtungen sind entweder plattenförmig ausgebildet oder mit einer Grundfläche versehen, die auf geraden Flächen aufsetzbar ist. Zwischen Aufspannmodul und Arbeitsvorrichtung wird die Verbindung des Werkstückes mit dem Maschinentisch hergestellt. Die beim Arbeitsvorgang anfallenden Schmutzpartikel überziehen sowohl das Aufspannmodul, als auch die Arbeitsvorrichtung. Durch den Einsatz von Kühlflüssigkeiten werden diese Partikel auch noch aufgeschwemmt und dringen überall ein. Insbesondere ist hiervon die zentrale Zylinderbohrung 2 betroffen.

Zur Abdichtung dieser Zylinderbohrung ist ein Schließkolben 4 vorgesehen, der mit einer Kopfplatte bestückt ist. Dieser Schließkolben 4 ist in einer Sackbohrung 16 angeordnet, die in das Aufspannmodul 7 unterhalb der Zylinderbohrung 2 eingelassen ist Diese Sackbohrung kann dem Durchmesser der Zylinderbohrung angeglichen sein, oder davon abweichend ausgeführt sein, so daß eine Abstufung entsteht. Wichtig ist, daß die Kopfplatte des Schließkolbens 4 dem Durchmesser der Zylinderbohrung angepaßt ist. Der Schließkolben 4 ist so in die Sackbohrung 16 eingebracht, daß seine Kopfplatte unmittelbar unterhalb des eingesetzten Einzugsnippels 3 liegt. Damit schließt der Schließkolben 4 den Raum unterhalb des Einzugsnippels ab.

Wird der Einzugsnippel 3 aus der Zylinderbohrung 2 herausgezogen, wird gleichzeitig der Schließkolben 4 durch die Zylinderbohrung 2 gleitend nach oben nachgeführt, so daß die Zylinderbohrung verschlossen bleibt auch wenn der Einzugsnippel entfernt ist Der Schließkolben 4 wird hierbei zunächst so weit aus der Zylinderbohrung herausgefahren, daß er aus dieser herausragt. In den Schließkolben 4 sind in seiner Kopfplatte radial. Mehrere nach außen gerichtete Austrittsdüsen 5 eingelassen, die auch als Schlitze oder Einstiche ausgebildet sein können und die mit einem Druckluftkanal in Verbindung stehen, der vorzugsweise im Innern des Schließkolbens eingebracht ist. Sobald der Schließkolben seine Position im ausgefahrenen Zustand erreicht hat, wird aus den Austrittsdüsen 5 Luft über die Oberfläche der Scheibe 1 geblasen und diese im weiten Umkreis von Verunreinigungen befreit.

Der Schließkolben 4 kann zusätzlich so ausgebildet werden, daß er auch eine Drehbewegung um einen vorgegebenen Winkel vollführt. Das hat den Vorteil, daß der Schließkolben im ausgefahrenen Zustand durch die Drehbewegung und durch ein gleichzeitiges Blasen die Oberfläche der Scheibe kreisförmig frei bläst, so daß alle Schmutzpartikel in einem relativ großen Umkreis entfernt sind. Die Drehbewegung kann durch entsprechende Druckluftkanäle im Innern des Schließkolbens erzeugt werden oder mechanisch durch Kulissenbahnen oder Drehspindeln und dergleichen. Nach dem Freiblasen der Oberfläche fährt der Schließkolben 4 soweit zurück, bis seine Kopffläche mit der Oberfläche der Scheibe 1 eine Einheit bildet. Die Zylinderbohrung 2 ist damit bis zum erneuten Einbringen eines Einzugsnippels geschlossen und bleibt frei von allen Schmutzpartikeln. Wird ein Einzugsnippel 3 eingezogen, so wird der Schließkolben 4 gleichzeitig nach unten in seine Ausgangsstellung gefahren.

Um zu verhindern, daß bereits zu einem Zeitpunkt, wo der Schließkolben noch nicht ganz ausgefahren ist, jedoch der Einzugsnippel bereits entfernt ist, Schmutz in die Zylinderbohrung gelangen kann, sind zusätzlich Zentraldüsen 13 am oberen Teil der Zylinderbohrung 2 vorgesehen. Durch diese Zentraldüsen 13 wird bereits Druckluft zu einem Zeitpunkt in die Zylinderbohrung geblasen, bevor der Einzugsnippel 3 endgültig diese Bohrung verlassen hat. Zweckmäßig werden diese Zentraldüsen 13 so angeordnet, daß ihr Luftstrom leicht nach oben gerichtet ist. Damit wird verhindert, daß Schmutzpartikel in die Zylinderbohrung eindringen, bevor der Schließkolben seine Endstellung erreicht hat. Diese Zentraldüsen 13 können auch unabhängig vom Schließkolben betätigt werden.

Der Schließkolben 4 ist unterhalb der Zylinderbohrung 2 in der Sackbohrung 16 des Aufspannmoduls 7 angeordnet. Hier ist ein feststehender Teil 6 vorgesehen, in dem bewegliche Teile, die dem Schließkolben zugeordnet sind, so eingepaßt sind, daß sie teleskopartig ausfahrbar sind und dabei den Schließkolben mitnehmen. Der Schließkolben kann auch durch eine Gewindedrehbewegung ein- und ausgefahren werden. Das Ein- und Ausfahren kann pneumatisch, hydraulisch, mechanisch oder elektrisch erfolgen.

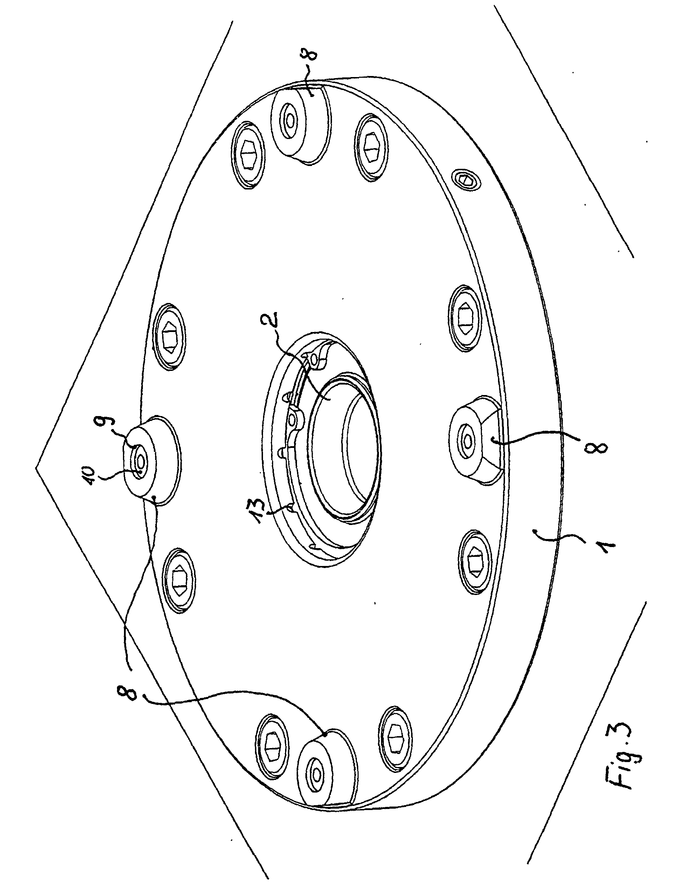

Die Scheibe 1 besitzt wie Fig. 3 zeigt, mehrere Aufnahmeinseln 8, auf denen eine Arbeitsvorrichtung auflegbar ist. Diese Aufnahmeinseln sind ebenfalls Verschmutzungen ausgesetzt. Jede Verunreinigung der Auflagefläche bedeutet, daß ein Aufsetzen einer Arbeitsvorrichtung nicht korrekt erfolgt. Somit sind die Aufnahmeinseln 8 ebenfalls einer Reinigung zu unterziehen, bevor sie neu bestückt werden. In die Aufnahmeinseln sind mittig Bohrungen 9 eingebracht, in denen ein Ausblasstempel 10 gleitend geführt ist. Dieser Ausblasstempel 10 kann im Ruhezustand leicht in die Oberfläche der Aufnahmeinsel eingezogen sein oder mit dieser abschließen. Wird eine Arbeitsvorrichtung von den Aufnahmeinseln abgehoben, fahren die Ausblasstempel 10 aus. Jeder Ausblasstempel 10 ist radial mit nach außen gerichteten Luftaustrittsöffnungen 11 am oberen Ende bestückt.

Durch diese Luftaustrittsöffnungen wird Druckluft geblasen, die über die Oberfläche der Aufnahmeinseln geleitet ist und diese frei bläst.

Statt einer kreisförmigen Anordnung der Luftaustrittsöffnungen 11 kann auch nur eine Mittendüse 12 in den Ausblasstempel 10 eingelassen sein. Diese Mittendüse strahlt dann nach oben und erzielt ihre Wirkung dann, wenn die Arbeitsvorrichtung gerade abgehoben wird. Der Rückstrom von der Unterseite der Arbeitsvorrichtung spült nicht nur die Aufnahmeinsel frei, sondern auch deren Umgebung. Zweckmäßig wird die Unterseite der Arbeitsvorrichtung über den Wirkungsbereich der Mittendüse noch entsprechend geformt. Bei dieser Ausführung ist es nicht erforderlich, den Ausblasstempel 10 auszufahren. Die Mittendüse kann auch unmittelbar in die Aufnahmeinsel eingelassen sein, so daß der Ausblasstempel entfällt.

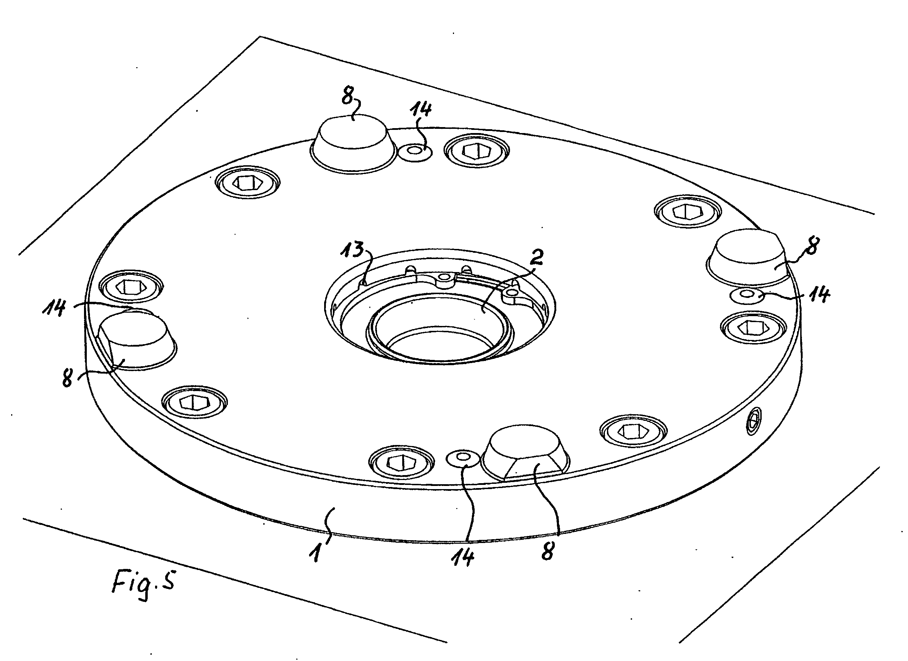

Es bietet sich eine weitere Ausführung an, die in Fig. 5 u. 6 gezeigt ist. Die Auflagefläche der Aufnahmeinseln 8 ist nicht mit Bohrungen versehen, dafür sind dezentrale Ausblasstempel 14 unmittelbar neben jeder Aufnahmeinsel angeordnet, diese können in Bohrungen, die direkt in die Scheibe 1 eingelassen sind, angeordnet sein. Sie können aber auch außen am Scheibenrand befestigt sein. Die dezentralen Ausblasstempel sind in ihren Bohrungen fixiert, so daß sie unverdrehbar ein- und ausfahrbar sind. In ihrem Kopf sind radial nach außen gerichtete Luftausblasöffnungen 15 eingelassen, die im ausgefahrenen Zustand direkt auf die Flächen der Aufnahmeinseln 8 gerichtet sind. Diese dezentralen Ausblasstempel 14 können zusätzlich oder nur mit einer Mittendüse 12 versehen sein, die nach oben gegen die Unterseite der Arbeitsvorrichtung strahlt und von da zurückstrahlt. Diese Ausblasstempel haben den Vorteil, daß sie schon während des Ausfahrens in Aktion treten können, und daß damit das Freiblasen schon zu einem Zeitpunkt beginnt, zu dem die Arbeitsvorrichtung noch nicht abgehoben hat.

### Bezugszeichenliste:

- 1: Scheibe
- 2: Zylinderbohrung
- 3: Einzugsnippel
- 4: Schließkolben
- 5: Austrittsdüsen
- 6: Festteil
- 7: Aufspannmodul
- 8: Aufnahmeinsel
- 9: Bohrung
- 10: Ausblasstempel
- 11: Luftaustrittsöffnung
- 12: Mittendüse
- 13: Zentraldüse
- 14: Dezentraler Ausblasstempel
- 15: Ausblasöffnung
- 16: Sackbohrung

## Patentansprüche

1. Spannvorrichtung zum positionierten Spannen von Werkstücken oder Werkzeugen auf Aufspannmodule (7), die in Maschinentischen oder Aufspannplatten integriert sind und die mit Positionierbohrungen in Form von Zylinderbohrungen (2) versehen sind, in die Einzugsnippel (3) eingesetzt werden und die mit Einrichtungen zum Ausblasen von Verunreinigungen bestückt sind, **dadurch gekennzeichnet, daß** eine Scheibe (1) mit mehreren Aufnahmeinseln (8) bestückt ist und mittig mit einer Zylinderbohrung (2) versehen ist, in die Einzugsnippel (3) einführbar sind, daß die Scheibe (1) mit einem Aufspannmodul (7) verbunden ist, das eine zentrale Sackbohrung (16) besitzt, die unterhalb der Zylinderbohrung (2) angeordnet ist und daß in dieser zentralen Sackbohrung (16) ein Schließkolben (4) gelagert ist, der aus der Sackbohrung heraus in die Zylinderbohrung (2) einfahrbar ist und der in seiner ausgefahrenen Endposition die Zylinderbohrung (2) mit der Oberfläche der Scheibe (1) bündig abschließt.

2. Spannvorrichtung nach Anspruch 1, **dadurch gekennzeichnet, daß** der Schließkolben (4) eine Kopfplatte besitzt, in die radial nach außen mehrere Austrittsdüsen (5) eingelassen und mit einem Druckluftkanal verbunden sind und daß der Schließkolben (4) beim Ausfahren aus dem Zylinder in eine Stellung gebracht wird , in der seine Kopfplatte oberhalb der Kante der Zylinderbohrung liegt, daß in dieser Stellung aus den Ausblasdüsen (5) ein Luftstrom über die Oberfläche der Scheibe (1) geleitet ist und daß der Schließkolben (4) nach Beendigung des Ausblasvorganges in den Zylinderraum (2) zurückgezogen wird, bis seine Kopfplatte bündig mit der Fläche der Scheibe (1) abschließt.

3. Spannvorrichtung nach Anspruch 1 und 2, **dadurch gekennzeichnet, daß** der Schließkolben (4) drehbar gelagert ist und während des Ausfahrens aus dem Zylinderraum (2) eine Drehbewegung um einen vorgegebenen Winkel vollführt, so daß die Ausblasdüsen (5) der Kopfplatte des Schließkolbens während des Ausblasens über die Oberfläche der Scheibe (1) schwenkbar sind.

4. Spannvorrichtung nach Anspruch 1, **dadurch gekennzeichnet, daß** in die Zylinderbohrung (2) im oberen Bereich mehrere Zentraldüsen (13) eingelassen sind, aus denen ein leicht nach oben gerichteter Luftstrom ausblasbar ist.

5. Spannvorrichtung nach Anspruch 1, **dadurch gekennzeichnet, daß** in die Aufnahmeinseln (8) der Scheibe (1) zentrale Bohrungen (9) eingebracht sind, in die je ein Ausblasstempel (10) gleitend geführt ist, daß der Ausblasstempel (10) kreisförmig mit Luftaustrittsöffnungen (11) versehen ist und daß der Ausblasstempel (10) aus der Aufnahmeinsel (8) ausfahrbar ist und einen Luftstrom über diese leitet.

6. Spannvorrichtung nach Anspruch 1, **dadurch gekennzeichnet, daß** den Aufnahmeinseln (8) dezentrale Ausblasstempel (14) zugeordnet sind, die unmittelbar neben jeder Aufnahmeinsel der Scheibe (1) geführt sind und die mit Ausblasdüsen (15) bestückt beim über die Aufnahmeinseln leiten.

7. Spannvorrichtung nach Anspruch 5 und 6, **dadurch gekennzeichnet, daß** der Ausblasstempel (10) und der dezentrale Ausblasstempel (14) mit einer Mittendüse (12) versehen sind, deren Luftstrom nach oben gerichtet von der Arbeitsvorrichtung im Augenblick der Abnahme umgelenkt und über die Aufnahmeinsel und deren Umgebung geleitet ist.

8. Spannvorrichtung nach Anspruch 6, **dadurch gekennzeichnet, daß** die Ausblasstempel (14) in ihren Lage zur Aufnahmeinsel fixiert sind.

## Claims

1. Clamping device for positioned clamping of work pieces or tools on clamping modules (7) integrated into machine tables or mounting plates and provided with positioning bores in the form of cylindrical bores (2) for the insertion of draw-in nipples (3) and equipped with means for blowing out contaminations, **characterised in that** a disk (1) is equipped with a plurality of receiving islets (8) and provided with a central cylindrical bore (2) into which said draw-in nipples (3) can be inserted, that said disk (1) is connected to a clamping module (7) that is provided with a central blind bore (16) disposed underneath said cylindrical bore (2), and that a closing piston (4) is supported in this central blind bore (16), which can be displaced out of said blind bore into said cylindrical bore (2) and that closes said cylindrical bore (2) in a manner flush with the surface of said disk (1) when it is in its extended terminal position.

2. Clamping device according to Claim 1, **characterised in that** said closing piston (4) is provided with a top plate into which a plurality of discharge nozzles (5) are recessed, which extend radially to the outside and which are connected to a compressed-air duct, and that said closing piston (4), when extended out of said cylinder, it carried into a position in which its top plate is above the edge of said cylindrical bore, that in this position an air flow is passed out of said discharge nozzles (5) over the surface of said disk (1), and that after completion of the blowing operation, said closing piston (4) is retracted into said cylindrical space (2) until its top plate is flush with the surface of said disk (1).

3. Clamping device according to the Claims 1 and 2, **characterised in that** said closing piston (4) is supported for rotation and performs a rotating movement through a predetermined angle during its extension out of said cylindrical space (2), such that said blowing nozzles (5) of said top plate of said closing piston are pivotable over the surface of said disk (1) during the blow-out operation.

4. Clamping device according to Claim 1, **characterised in that** a plurality of central nozzles (13) are recessed in the upper region of said cylindrical bore (2), from which nozzles a slightly upwardly directed air flow can be discharged.

5. Clamping device according to Claim 1, **characterised in that** central bores (9) are formed in said receiving islets (8) of said disk (1), into which bores a respective blow-out plunger (10) is guided in a sliding movement, that said blow-out plunger (10) is provided with air discharge openings (11) in a circular arrangement, and that said blow-out plunger (10) is adapted for being extended from said receiving islet (8) and for passing an air flow over the latter.

6. Clamping device according to Claim 1, **characterised in that** decentralised blow-out plungers (14) are associated with said receiving islets (8), which are guided immediately beside each receiving islet of said disk (1) and which are equipped with blow-out nozzles (15) that guide an air flow over said receiving islets (8) when said plunger (14) is extended.

7. Clamping device according to the Claims 5 and 6, **characterised in that** said blow-out plunger (10) and said decentralised blow-out plunger (14) are provided with a central nozzle (12) discharging an upwardly directed air flow that is deflected from the operating device in the moment of removal passed over said receiving islet and its environment.

8. Clamping device according to Claim 6, **characterised in that** said blow-out plungers (14) are fixed in their positions relative to said receiving islet.

## Revendications

1. Dispositif de serrage à serrer, de façon positionnée, des pièces à usiner ou des outils sur des modules de serrage (7) intégrés dans des tables des machines-outils ou dans des plateaux de fixation et munis des alésages de positionnement sous forme des alésages cylindriques (2) pour l'introduction des nipples d'insertion (3) et munis de moyens à purger des impuretés, **caractérisé en ce qu'**un disque (1) est muni d'une pluralité d'îlots récepteurs (8) et pourvu d'un alésage cylindrique (2) central, dans lequel on peut introduire lesdits nipples d'insertion (3), **en ce que** ledit disque (1) est raccordé à un module de serrage (7), qui est muni d'un alésage borgne (16) central, disposé au-dessous dudit alésage cylindrique (2), et **en ce qu'**un piston de fermeture (4) est logé dans cet alésage borgne (16) central, qui est déplaçable en dehors dudit alésage borgne dans ledit alésage cylindrique (2) et qui ferme ledit alésage cylindrique (2) d'une manière à surface plane avec la surface dudit disque (1), quand il se trouve en sa position fin de course sortie.

2. Dispositif de serrage selon la revendication 1, **caractérisé en ce que** ledit piston de fermeture (4) est muni d'une plaque supérieure, dans laquelle une pluralité de tuyères de décharge (5) sont encastrés, qui s'étendent en sens radial vers l'extérieur et qui sont raccordés à une conduite d'air comprimé, et **en ce que** ledit piston de fermeture (4), en étant sorti dudit cylindre, est porté en une position dans laquelle sa plaque supérieure se trouve au-dessus du bord dudit alésage cylindrique, **en ce qu'**en cette position, un courant d'air est passé en dehors desdites tuyères de décharge (5) sur la surface dudit disque (1), et, suivant la terminaison de l'opération de purge, ledit piston de fermeture (4) est retiré dans ledit espace cylindrique (2), jusqu'à ce que sa plaque supérieure soit affleurée avec la surface dudit disque (1).

3. Dispositif de serrage selon les revendications 1 et 2, **caractérisé en ce que** ledit piston de fermeture (4) est logé de façon rotative et réalise un mouvement rotatoire par un angle prédéterminé au cours de son mouvement de sortie en dehors dudit espace cylindrique (2), de façon, que lesdites tuyères de purge (5) de ladite plaque supérieure dudit piston de fermeture soient pivotables sur la surface dudit disque (1) au cours de l'opération de purge.

4. Dispositif de serrage selon la revendication 1, **caractérisé en ce qu'**une pluralité de tuyères centrales (13) sont encastrées dans la zone supérieure dudit alésage cylindrique (2), par lesquelles on peut décharger un courant d'air légèrement dirigé en haut.

5. Dispositif de serrage selon la revendication 1, **caractérisé en ce que** des alésages centraux (9) sont formés dans lesdits îlots récepteurs (8) dudit disque (1), dans lesquels un piston de purge (10) respectif est guidé à glissement, **en ce que** ledit piston de purge (10) est muni des ouvertures de décharge de l'air (11) en un arrangement circulaire, et **en ce que** ledit piston de purge (10) est apte à être sorti dudit îlot récepteur (8) et à passer un courant d'air sur le dernier.

6. Dispositif de serrage selon la revendication 1, **caractérisé en ce que** des pistons de purge décentralisés (14) sont affectés auxdits îlots récepteurs (8), qui sont guidés directement du côté de chaque îlot récepteur dudit disque (1) et qui sont munis des tuyères de purge (15), qui guident un courant d'air sur lesdits îlots récepteurs (8), quand ledit piston de purge (14) est sorti.

7. Dispositif de serrage selon les revendications 5 et 6, **caractérisé en ce que** ledit piston de purge (10) et son piston de purge (14) décentralisé sont munis d'une tuyère centrale (12), qui décharge un courant d'air dirigé en haut, qui est dévié à partir du dispositif de travail au moment d'enlèvement et passé sur ledit îlot récepteur et ses environs.

8. Dispositif de serrage selon la revendication 6, **caractérisé en ce que** lesdits pistons de purge (14) sont fixés en leurs positions relativement audit îlot récepteur.
